# EUROPÄISCHE PATENTSCHRIFT

(11) **EP 2 311 590 B1**
(45) Veröffentlichungstag und Bekanntmachung des Hinweises auf die Patenterteilung: **03.10.2012**
(21) Anmeldenummer: 10012909.7
(22) Anmeldetag: 18.08.2006
(51) Int. Cl.: B23D 49/10, B23D 51/01, B27B 21/04

(54) **Handsäge**
Hand saw
Scie à main

(30) Priorität: 29.08.2005 DE 102005040896
(43) Veröffentlichungstag der Anmeldung: 20.04.2011
(62) Teilanmeldung aus: 06776959.6
(73) Patentinhaber: Irwin Industrial Tools GmbH, 85399 Hallbergmoos (DE)
(72) Erfinder: Field, Robert, Bakewell Derbyshire DE 1AA (GB); Geier, Manfred, 82178 Puchheim (DE)
(74) Vertreter: Schmid, Nils T.F.

(56) Entgegenhaltungen:
- EP-A2- 0 910 942
- FR-A- 525 036
- US-A- 2 403 027
- US-A- 3 825 047

## Beschreibung

Die Erfindung betrifft eine Handsäge mit einem Griff zum Betätigen der Handsäge und einem Sägeblatt. Bei einer Hin- und Herbewegung kommt der mit Zähnen versehener Schneidrand des Sägeblattes in abspanenden Eingriff mit einem Werkstück.

Moderne Handsägen besitzen Zähne mit sich gegenüberliegenden Flanken, die beide ausgesprochen scharf und gehärtet sind. Die Schneideffizienz und die Eindringeffizienz der Zähne in das Werkstück sind dadurch optimiert. Der Betätigungsgriff der Handsäge weist üblicherweise ein von dem Sägeblatt abgewandtes Griffteil auf, das zum Betätigen der Handsäge von der Hand einer Bedienperson umfasst wird. Beim Sägen in einer Vorschubbewegung wird dem Griff vor allem eine hin zum Sägeblatt gerichtete Betätigungskraft mitgeteilt, bei der eine vertikale Kraftkomponente das Eindringen der Zähne in das Werkstück veranlasst und die horizontale Kraftkomponente für die Hin- und Herbewegung der Handsäge verantwortlich ist.

US 2,403,027, US 3,825,47, EP 0910942 A1 und FR 525.036 offenbaren übliche Handsägen. Da, Oberbegriff von Anspruch 1 basiert auf der US2, 403, 027.

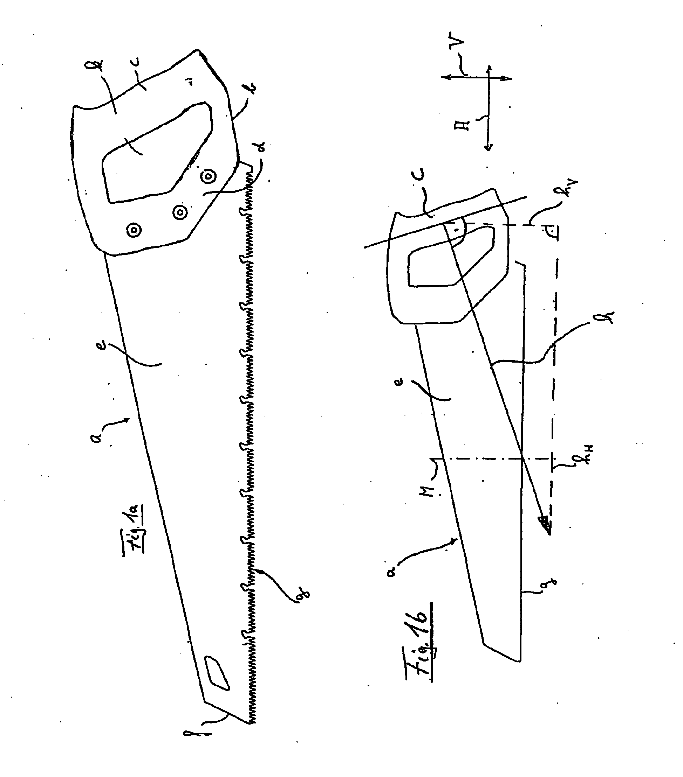

Eine bekannte, sich im alltäglichen Gebrauch aufgrund ihrer sehr hohen Schneideeffizienz bewährt habende Handsäge ist in Figur 1a dargestellt. Die Handsäge a umfasst einen Griff b mit einem Griffteil c und einem Halteabschnitt d, wobei der Griffteil c und der Halteabschnitt d eine einstückige, im wesentlichen ringförmige Struktur bilden, die ein Aussparung k für den Durchgriff der Finger einer Bedienperson definiert. An dem Halteabschnitt d ist ein Metallsägeblatt e befestigt, dessen Höhe vom Griffteil c hin zum freien Ende f kontinuierlich abnimmt. Das Sägeblatt e umfasst einen im wesentlichen geraden Schneidrand g, der mit einer Zahnreihe ausgebildet ist, deren Zähne aus geometrischer Sicht im wesentlichen identisch sind. Zwischen zwei Zahnreihengruppen ist eine sich in das Sägeblatt erstreckende, im wesentlichen L-förmige Aussparung zur Aufnahme und zum Abtransport von Sägespänen aus dem Schnittbereich des Werkstücks ausgebildet.

In Figur 1b ist ein Krafteintragsvektor h angedeutet, dessen Richtung angibt, wie die bei einer Vorschubbewegung von der Bedienperson dem Griffteil c mitgeteilte Betätigungskraft in das Sägeblatt e eingeleitet wird. Die Wirkrichtung des Krafteintragsvektors h ist im wesentlichen als Lotrechte zur Längserstreckung des Griffteils c definiert, den die Hand der Bedienperson umfaßt. Der Krafteintragsvektors h spaltet sich in eine horizontale Komponente h_{H} und eine vertikale Komponente hᵥ auf. Wie in Figur 1b ersichtlich ist, überwiegt die horizontale Komponente h_{H} deutlich, so daß eine Bedienperson einen Großteil der Betätigungskraft dafür aufbringt, die Vorschub- und Rückzugsbewegung durchzuführen. Der Krafteintragsvektor h schneidet den Schneidrand g im wesentlichen in der Mitte des Sägeblatts, die durch die zum Schneidrand g senkrechte Mittellinie M definiert ist.

Den Schnittpunkt der Krafteintragsrichtung im wesentlichen auf Höhe der Mittellinie M festzulegen beruht auf der technischen Annahme, daß damit die gesamte Handsägenlänge am besten ausgeschöpft werden könne und eine optimale Kontrolle der Handsäge beim Ansägen gewährleistet sei. Trotz der guten Sägeeffektivität der bekannten Handsäge stellte es sich für eine ungeübte Bedienperson als schwierig heraus, beim Ansägen des Werkstücks eine Sägespur zu legen und die Handsäge in der frischen Sägespur zu halten. Vielmehr neigt die bekannte Handsäge dazu, beim Ansägen entweder aus der frischen Sägespur heraus zu springen und der Sägespur benachbarte Oberflächenbereiche des Werkstücks zu verletzen oder sich mit dem Werkstück zu verhaken, was meist ein Absetzen und ein erneutes Ansetzen der Handsäge notwenig macht.

Es ist Aufgabe der Erfindung, eine Handsäge mit einem Griff zur Betätigung der Handsäge und einem Sägeblatt dahingehend zu verbessern, daß der Handsäge ein bessere Handhabekontrolle für das Ansägen eines Werkstücks verliehen wird, ohne die Sägeeffektivität der Handsäge zu beeinträchtigen.

Diese Aufgabe wird durch die Merkmale von Patentanspruch 1 gelöst.

Danach ist eine durch das Griffteil des Griffs, über den die Betätigungskraft der Handsäge mitgeteilt wird, definierte Krafteintragsrichtung, in der die mitgeteilte Betätigungskraft bei einer Vorschubbewegung in das Sägeblatt eingeleitet wird, derart festgelegt, daß sie den Schneidrand des Sägeblatts in einem Bereich einer ersten, dem Griff nahen Viertellänge des Schneidrands oder eine gedachte Verlängerung des Schneidrands im Bereich des Griffs schneidet.

Es stellte sich überraschenderweise heraus, daß mit der Verlagerung der Schnittstelle zwischen der Krafteintragsrichtung bei Vorschub der Handsäge und dem Schneidrand hin zum Griffteil eine deutliche Vereinfachung des Ansägens eines unversehrten Werkstücks einhergeht. Die Kontrolle über die Handsäge wird mit der erfindungsgemäßen Maßnahme derart verbessert, daß selbst ungeübten Bedienpersonen ein kontinuierlicher Sägevorgang mit einem einmaligen Ansetzen der Handsäge an dem Werkstück ohne weiteres gelingt. Überraschenderweise geht mit der verbesserten Handhabekontrolle keine Abnahme der Sägeeffektivität einher. Im Gegenteil stellte sich gemäß einer Versuchsreihe unerwarteterweise heraus, daß aufgrund der verbesserten Handhabekontrolle der erfindungsgemäßen Handsäge ein Werkstück bei wesentlichen weniger Sägehüben durchtrennt wird als mit einer bekannte Handsäge identischer Sägeblattkonfiguration. Auch konnte festgestellt werden, daß bei der erfindungsgemäßen Handsäge Ermüdungserscheinungen der Bedienperson erst viel später auftraten als bei der bekannten Handsäge. Mit der Verlagerung der Schnittstelle zwischen der Krafteintragsrichtung und dem Schneidrand hin zum Griff, können dem Werkstück bei gleichem Betätigungskraftaufwand höhere vertikale Kraftkomponenten mitgeteilt werden, was die Zähne des Schneidrands tiefer in das Werkstück eindringen läßt. Aufgrund der erfindungsgemäßen Maßnahme konnte festgestellt werden, daß die Sägeeffektivität bei einem Sägehub erhöht werden kann, weil die an den Sägezähnen angreifenden Betätigungskräfte über das gesamte Sägeblatt gleichmäßig verteilt werden. Durch die Verlagerung der Schnittstelle hin zum Griff wurde zum einen verhindert, daß übermäßige Sägekräfte in das Werkstück im Bereich der Schneidrandmitte eingeleitet werden. Zu große vertikale Sägekräfte können zu vermeidende Verfestigungen am zu sägenden Werkstück hervorrufen, welche dem Sägevorgang nicht förderlich sind. Die Erfindung stellt hingegen sicher, daß an jedem Zahn im wesentlichen die gleiche Betätigungskraft dem Werkstück mitgeteilt wird, so daß auch der sonst wenig effektive freie Endbereich des Schneidrands des Sägeblatts stärker und wirksam beim Sägevorgang beteiligt ist.

Hierbei ist vorzugsweise der Schnittpunkt so weit zum Griff hin zu verlagern oder sogar darüber hinaus, daß ein Treffen des Schneideingriffs des Schneidrands mit dem Werkstück und der Schnittstelle zwischen Krafteintragsrichtung und Schneidrand in jedem Sägebetriebszustand verhindert bleibt.

Bei einer bevorzugten Ausführung der Erfindung schneidet die Krafteintragsrichtung den Schneidrand des Sägeblatts im Bereich des Übergangs oder der Verbindung zwischen dem Griff und dem Sägeblatt. Mit dieser Konfiguration scheint die Handhabekontrolle über die Handsäge optimiert zu sein.

Eine konstruktive Möglichkeit, eine Verschiebung der Schnittstelle zwischen der Krafteintragsrichtung bei Vorschub der Säge und der Schneidkante hin zum Griff zu realisieren, kann darin bestehen, daß der Griff und/oder der Griffteil zur Schneidkante des Sägeblatts hin in einer zur Schneidkante vertikalen Richtung verlagert wird. Mit der Verlagerung des Griffteils hin zum Schneidrand kann der Neigungswinkel zwischen der Krafteintragsrichtung und der Schneidkante, also das Verhältnis von vertikaler und horizontaler Komponente der Betätigungskraft, konstant gehalten werden. Vorzugsweise kann der Griff und/oder das Griffteil derart weit zum Schneidrand verlagert sein, daß eine gedachte Verlängerung des Schneidrands den Griff und/oder den Griffteil in einem Bereich eines ersten, dem Schneidrand nahen Höhenviertels des Griffs kreuzt.

Eine weitere Möglichkeit, die gewünschte Verlagerung der Krafteintragsrichtung hin zum Griff zu erreichen, ohne den strukturellen Aufbau der bekannten Handsäge, insbesondere den Anbindungsort des Sägeblatts an den Griff, zu verändern, besteht darin, den Neigungswinkel zwischen der Krafteintragsrichtung und dem im wesentlichen linearen Verlauf des Schneidrands zu vergrößern, indem das Griffteil stärker zum Schneidrand des Sägeblatts hin geneigt wird.

Beide Möglichkeiten können kombiniert werden.

In einem von dem oben erläuterten unabhängigen oder abhängigen Aspekt der Erfindung soll der Neigungswinkel zwischen der Krafteintragsrichtung bei Vorschub der Handsäge und dem geraden Verlauf des Schneidrands größer als 25° sein. Eine besonders gute Ansägkontrolle und Sägeeffektivitäten wurden bei Neigungswinkeln zwischen 35° und 45° erreicht. Vorzugsweise ist festzuhalten, daß der Neigungswinkel kleiner als 60° sein soll. Es sei klar, daß der Neigungswinkel zum Schneidrand als Referenzlinie betrachtet wird. Sollte für den Schneidrand keine gerade Referenzlinie vorliegen, so kann beispielsweise bei einem gewellten Schneidrand die entsprechende Mittellinie des gewellten Schneidrands als Referenzlinie dienen. Sollte ein bogenförmiger Schneidrand gewählt sein, so ist die Referenzlinie für den Schneidwinkel die Tangente an der Schnittstelle zwischen der Krafteintragsrichtung und dem bogenförmigen Schneidrand.

Weitere Vorteile, Eigenschaften und Merkmale der Erfindung werden durch die folgende Beschreibung bevorzugter Ausführungen der Erfindung anhand der beiliegenden Zeichnungen deutlich, in denen zeigen:
Figur 2a eine Seitenansicht der erfindungsgemäßen Handsäge;
Figur 2b eine schematische Ansicht der Handsäge nach Figur 2a mit einer Veranschaulichung des Betätigungskraftverlaufs bei einer Vorschubbewegung der Handsäge;
Figur 3a eine Seitenansicht einer weiteren erfindungsgemäßen Handsäge und
Figur 3b eine schematische Ansicht der Handsäge gemäß Figur 3a mit Veranschaulichung des Betätigungskraftverlaufs bei einer Vorschubbewegung der Handsäge.

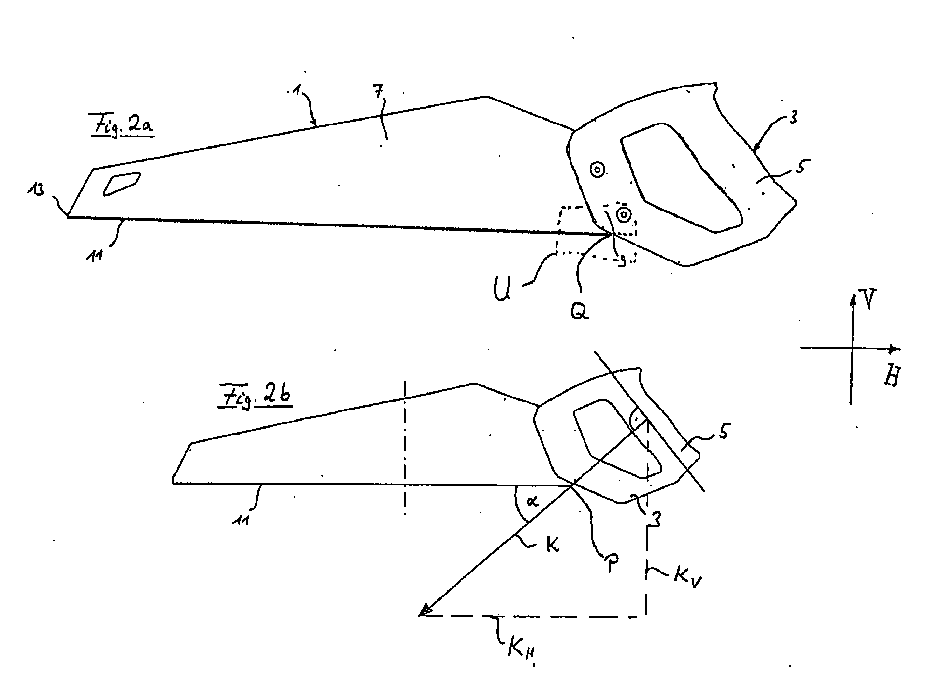

Die erfindungsgemäße Handsäge 1 gemäß Figur 2a umfaßt einen Griff 3, der zu dem Griff (c) der bekannten Handsäge gemäß Figur 1 a identisch ist.

Der Griff 3 umfaßt einen einem Sägeblatt 7 fernen Griffteil 5, der von der Hand einer Bedienperson umfaßt werden kann. Des weiteren weist der Griff 3 einen Halteabschnitt 9 auf, an dem das Sägeblatt 7 befestigt ist.

Bei der Handsägenausführung gemäß Figur 2a ist das Sägeblatt 7 mit einer kontinuierlichen Zahnreihe 11 versehen, die sich ununterbrochen von dem freien Ende 13 der Säge bis zum Griff 3 erstreckt.

Wie bei einem konstruktiven Vergleich der Handsägenausführungen gemäß Figur 1a und Figur 2a ersichtlich ist, ist der Griff 3 deutlich in vertikaler Richtung V hin zum Schneidrand 11 verlagert. Außerdem ist der Griffteil 5 wesentlicher stärker hin zum Schneidrand 11 geneigt als das Griffteil c der bekannte Handsäge a gemäß Fig. 1a.

Ein überschüssige Sägeblattabschnitt auf der dem Schneidrand 11 gegenüberliegenden Seite des Sägeblatts 7 im Bereich des Griffs 3 ist zum Verringern des Gewichts der Handsäge 1 ausgespart.

Wie in Figur 2b ersichtlich ist, schneidet der durch das Griffteil 5 definierte Krafteintragsvektor K bei einer Vorschubbewegung der Handsäge den Schneidrand 11 aufgrund der bezüglich dem Schneidrand 11 abgesenkten und geneigten Position des Griffs 3 am Übergangsbereich U, insbesondere genau am Übergang (Q), vom Sägeblatt 7 zum Griff 3. Die Richtung des Krafteintragsvektors K ist durch die Lotrechte zur Griffläche des Griffteils 5 definiert, an welcher der Handballen (nicht dargestellt) der Bedienperson anliegt. Es zeigte sich, daß die Nähe des Schnittpunkts P zum Griff für die deutlichere Verbesserung der Handhabekontrolle der Handsäge 1 verantwortlich ist. Der Neigungswinkel a zwischen der Richtung des Krafteintragsvektor K und dem Schneidrand 11 liegt bei ca. 45°.

Bei dem Krafteintragsvektor K sind die horizontale und vertikale Komponente im wesentlichen gleich groß, so daß beim Betätigen der Handsäge 1 gleiche Kräfte für die horizontale Bewegung der Handsäge 1 und für das Eindringen der Zähne in das Werkstück (nicht dargestellt) aufgebracht werden können.

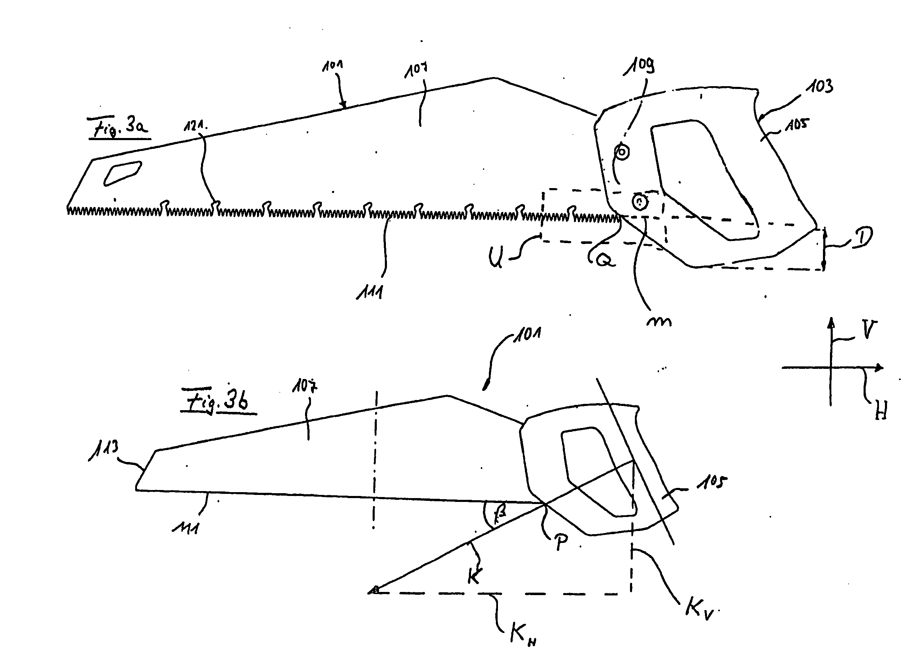

Bei der Ausführung gemäß Figur 3a sind zur besseren Lesbarkeit der Figurenbeschreibung identische Bezugsziffern verwendet, die gegenüber der Ausführung gemäß Figur 2a und 2b um 100 erhöht sind.

Die Handsäge 101 ist bezüglich des strukturellen Aufbaus des Griffs 103 und des Sägeblatts 107 im wesentlichen identisch zur Handsäge 1 gemäß Fig. 2a. Der Schneidrand 111 des Sägeblatts 107 ist zu dem der bekannten Säge a gemäß Fig. 1a identisch ausgeführt. Das Sägeblatt 107 unterscheidet sich von dem Sägeblatt 7 gemäß der Ausführung gemäß Figur 2a darin, daß eine gröbere Verzahnung vorgesehen ist, die durch L-förmige Spanaufnahmeaussparungen 121 in Zahngruppen unterteilt ist. Jede Zahngruppe weist eine identische Anzahl von Zähnen auf.

Wie in Figur 3b ersichtlich ist, schneidet die Richtung des Krafteintragsvektors K bei einer Vorschubbewegung der Handsäge 1 den Schneidrand 111 des Sägeblatts 107 im Übergangsbereich U, insbesondere genau am Übergang Q, zwischen Griff 103 und Sägeblatt 107.

Im Gegensatz zur Ausführung gemäß Figur 2b ist allerdings der Neigungswinkel β zwischen der Richtung des Krafteintragsvektors K und dem Schneidrand 111 mit ca. 35° kleiner als der Neigungswinkel a gemäß der Ausführung in Figur 2b, aber größer als der der bekannten Handsäge a gemäß Figur 1b. Um die Schnittstelle P zwischen der Richtung des Krafteintragsvektors K und dem Schneidrand 111 gemäß der Ausführung nach Figur 3b in den Übergangsbereich U zwischen dem Griff 103 und dem Sägeblatt 107 zu verlagern, ist der Griff 103 wesentlich stärker in vertikaler Richtung V hin zum Schneidrand 111 verschoben, so daß eine gedachte Verlängerung m des Schneidrands 111 den Griff 103 im Bereich von dessen erstem Höhenviertel D kreuzt.

Es sei klar, daß bei beiden erfindungsgemäßen Handsägenausführungen die vertikale Komponente Kᵥ des Krafteintragsvektors K größer ist als die der bekannten Handsäge a gemäß Fig. 1a, wodurch die Sägeeffektivität der erfindungsgemäßen Handsäge 1, 101 gegenüber der bekannten Handsäge a deutlich verbessert ist.

Die in der vorstehenden Beschreibung, den Figuren und den Ansprüchen offenbarten Merkmale können sowohl einzeln als auch in beliebiger Kombination für die Realisierung der Erfindung in den verschiedenen Ausgestaltungen von Bedeutung sein.

### Bezugszeichenliste

- 1, 101: Handsäge
- 3, 103: Griff
- 5, 105: Griffteil
- 7, 107: Sägeblatt
- 9, 109: Halteabschnitt
- 11, 111: Schneidrand
- 13, 113: freies Ende der Säge
- 121: Spanaufnahmeaussparungen
- α, β: Neigungswinkel
- D: Höhenviertel
- H: horizontale Richtung
- K: Krafteintragsvektor
- K_{V}: vertikale Komponente von K
- K_{H}: horizontale Komponente von K
- m: gedachte Verlängerung
- P: Schnittstelle
- Q: Übergang
- U: Übergangsbereich
- V: vertikale Richtung

## Patentansprüche

1. Handsäge mit einem Griff (3, 103) zum Betätigen der Handsäge (1, 101) und einem Sägeblatt (7, 107), das mit dem Griff (3, 103) verbunden ist und einen mit Zähnen versehenen Schneidrand (11, 111) aufweist, wobei der Griff(3, 103) ein von der Hand einer Bedienperson zu umgebendes Griffteil (5, 105) aufweist, um dem Griff (3, 103) eine Betätigungskraft mitzuteilen, wobei das Griffteil (5, 105) derart an dem Sägeblatt befestigt ist, dass nur eine definierte Krafteintragsrichtung festgelegt ist, in der die mitgeteilte Betätigungskraft in das Sägeblatt (7, 107) eingeleitet wird wobei die Krafteintragsrichtung durch eine Lotrechte zu einer Grifffläche des Griffteils (5, 105) definiert is und wobei die krafteintragsrichtung bei einer Vorschubbewegung der Handsäge (1, 101) den Schneidrand (11, 111) des Sägeblatts (7, 107) ein Neigungswinkel (α, β) zwischen der Krafteintragsrichtung und einem im wesentlichen linearen Verlauf des Schneidrands größer oder gleich 25° und kleiner als 60° ist, **dadurch gekennzeichnet, dass** im Bereich des Übergangs zwischen dem Griff(3, 103) und dem Sägeblatt (7,107) schneidet.

2. Handsäge insbesondere nach Anspruch 1, **dadurch gekennzeichnet, daß** ein Neigungswinkel (α) zwischen der Krafteintragsrichtung und einem im wesentlichen geraden Verlauf des Schneidrands (11) größer als 35° ist.

3. Handsäge insbesondere nach einem der Ansprüche 1 bis 2, **dadurch gekennzeichnet, daß** ein Neigungswinkel (α) zwischen der Krafteintragsrichtung und einem im wesentlichen geraden Verlauf des Schneidrands (11) größer als 40° ist.

4. Handsäge insbesondere nach einem der Ansprüche 1 bis 3, **dadurch gekennzeichnet, daß** ein Neigungswinkel (α) zwischen der Krafteintragsrichtung und einem im wesentlichen geraden Verlauf des Schneidrands (11) größer als 45° ist.

5. Handsäge nach einem der Ansprüche 1 bis 4, **dadurch gekennzeichnet, daß** der Griff (3, 103) einen Halteabschnitt (9, 109) aufweist, an dem das Sägeblatt (7, 107) befestigt ist, und das dem Sägeblatt (7, 107) ferne Griffteil (5, 105) und der Halteabschnitt (9, 109) derart miteinander verbunden sind, daß sie eine Ringstruktur bilden, die eine Aussparung zum Durchgriff der Finger einer Bedienperson definiert.

## Claims

1. Hand saw with a handle (3,103), for operating the hand saw (1,101), and a saw blade (7, 107) that is connected to the handle (3,103) and has a cutting edge (11,111) fitted with teeth, wherein the handle (3,103) has a gripping portion (5, 105) to be surrounded by the hand of an operating person for transmitting an operating force to the handle (3,103), wherein the gripping portion (5, 105) is fixed to the saw blade such that only one defined force introduction direction, in which the transmitted operating force is introduced into the saw blade (7, 107), is determinated, wherein the force introduction direction is defined by a perpendicular to a gripping surface of the gripping portion (5,105) and wherein an angle of inclination (α, β) between the force introduction direction and an essentially linear course of the cutting edge is larger than or equal to 25° and smaller than 60°, **characterised in that** the force introduction direction during a feed motion of the hand saw (1,101) intersects the cutting edge (11,111) of the saw blade (7,107) in the area of the transition between the handle (3,103) and the saw blade (7,107).

2. Hand saw according to claim 1, **characterised in that** an angle of inclination (α) between the force introduction direction and an essentially straight course of the cutting edge (11) is larger than 35°.

3. Hand saw according to one of the claims 1 or 2, **characterised in that** an angle of inclination (α) between the force introduction direction and an essentially straight course of the cutting edge (11) is larger than 40°.

4. Hand saw according to one of the claims 1 to 3, **characterised in that** an angle of inclination (α) between the force introduction direction and an essentially straight course of the cutting edge (11) is larger than 45°.

5. Hand saw according to one of the claims 1 to 4, **characterised in that** the handle (3,103) has a holding section (9,109) to which the saw blade (7, 107) is attached, and that the gripping portion (5, 105), facing away from the saw blade (7,107), and the holding section (9,109) are connected to each other such that they form a ring structure defining an opening for the insertion of the fingers of an operating person.

## Revendications

1. Scie à main dotée d'un manche (3,103) pour l'actionnement de la scie à main (1,101) et d'une lame de scie (7, 107) lié au manche (3,103), qui présente un bord tranchant (11, 111) doté de dents, le manche (3,103) présentant une partie de manche (5,105) à entourer par la main d'un utilisateur, afm de communiquer une force d'actionnement au manche (3,103), la partie de manche (5, 105) étant fixée sur la lame de scie de telle sorte que seul un sens d'introduction de force défini est fixé dans lequel la force d'actionnement transmise est introduite dans la lame de scie (7,107), le sens d'introduction de force étant défini par une perpendiculaire à une surface de poignée de la partie de manche (5,105) et un angle d'inclinaison (α, β) entre le sens d'introduction de force et un tracé sensiblement linéaire du bord tranchant étant supérieur ou égal à 25° et inférieur à 60°, **caractérisée en ce que** le sens d'introduction de force lors d'un mouvement d'avancement de la scie à main (1,101) coupe le bord tranchant (11, 111) de la lame de scie (7,107) dans la zone de la transition entre le manche (3,103) et la lame de scie (7,107).

2. Scie à main selon la revendication 1, **caractérisée en ce qu'**un angle d'inclinaison (α) entre le sens d'introduction de force et un tracé sensiblement droit du bord tranchant (11) est supérieur à 35°.

3. Scie à main selon l'une quelconque des revendications 1 ou 2, **caractérisée en ce qu'**un angle d'inclinaison (α) entre le sens d'introduction de force et un tracé sensiblement droit du bord tranchant (11) est supérieur à 40°.

4. Scie à main selon l'une quelconque des revendications 1 ou 2, **caractérisé en ce qu'**un angle d'inclinaison (α) entre le sens d'introduction de force et un tracé sensiblement droit du bord tranchant (11) est supérieur à 45°.

5. Scie à main selon l'une quelconque des revendications 1 à 4, **caractérisé en ce que** le manche (3,103) présente une partie de retenue (9,109) sur laquelle la lame de scie (7,107) est fixée, et **en ce que** la partie de manche (5, 105) éloignée de la lame de scie (7, 107) et la partie de retenue (9,109) sont reliées l'une à l'autre de telle sorte qu'elles forment une structure annulaire qui définit un évidement pour le passage des doigts d'un utilisateur.
